# EUROPEAN PATENT SPECIFICATION

(11) **EP 0 947 825 B1**
(45) Date of publication and mention of the grant of the patent: **29.11.2000**
(21) Application number: 98116902.2
(22) Date of filing: 08.09.1998
(51) Int. Cl.: G01N 21/65

(54) **Noble gas detection and determination**
Nachweis und Bestimmung von Edelgasen
Détection et détermination de gaz noble

(30) Priority: 21.04.1998 EP 98107198
(43) Date of publication of application: 06.10.1999
(73) Proprietor: Hewlett-Packard Company, Palo Alto, California 94304 (US)
(72) Inventor: Wunderling, Martin, 71083 Herrenberg (DE); Fischer, Bernhard, 71229 Leonberg (DE); Kästle, Siegfried, 71154 Nufringen (DE)
(74) Representative: Harbach, Thomas

(56) References cited:
- EP-A- 0 600 711
- EP-A- 0 658 759
- US-A- 4 784 486

## Description

### BACKGROUND OF THE INVENTION

The present invention relates to the determining of a composition of a gas mixture comprising an amount of one or more noble gases.

Gas detection, in general, is accomplished either by using optical absorption or by scattering of light. For absorption measurements, primarily the infrared (IR) spectral region is used, where the excitation of molecular vibrations contributes to the dipole moment of a molecule. Atomic gases, such as the noble gases, do not exhibit IR absorption. Scattering of light occurs as a consequence of the electronic polarizability of the electron cloud around atoms and molecules. The law of photometric summation applies, so that the total energy scattered by N molecules is just N times the energy scattered by one molecule.

Most incident photons are scattered by the sample with no change in frequency in a process known as Rayleigh scattering. Rayleigh scattering occurs from molecular as well as atomic species. However, with a small probability the scattered photons have frequencies f₀ +/- f₁, where f₀ is the frequency of the incident photon and f₁ is the frequency of a molecular vibration. This process is called **Raman scattering**. The modification of the scattered photons results from the incident photons either gaining energy from or losing energy to the vibrational or rotational motion of the molecule. Since complex molecules exist in a number of different rotational and vibrational states (depending on the temperature), many different values of f₁ are possible. Consequently, the Raman spectrum of a ***Raman-active gas*** will consist of a large number of scattered lines. Simple diatomic molecules like oxygen, O₂, or nitrogen, N₂, have just one Raman line.

To enhance the observation of the radiation at f₀ +/- f₁, the scattered radiation is observed perpendicularly to the incident beam. To provide high intensity incident radiation and to enable the observation of lines where f₁ is small (due to rotational changes), the source of a Raman spectrometer is normally chosen as a monochromatic visible laser. The scattered radiation can then be analyzed by use of a scanning optical monochromator with a photomultiplier tube or another suitable photo detector.

**Noble gases** have stable electron configurations and thus do not easily gain or lose electrons and rarely share them with other elements. Therefore, noble gases exist only as mono-atomic species that do not have any vibrational states and consequently do not give rise to Raman scattering, so that noble gases are generally **Raman non-active**.

A possibility for noble gas detection as known in the art is the resonance-ionization mass spectrometry (RIS). However, RIS can be applied to the inert or noble gases only with great difficulty due to the short wavelength required for the first excitation step.

Xenon (Xe), as a noble gas, has been investigated as an anaesthetic gas and has been proved as a possible anesthesia means substantially free of side effects and innocuous for the earth atmosphere and environment. Clinical tests for medical applications are underway e.g. in Germany.

A general difficulty with applying xenon as a component of a respiration gas is the required measuring technique for a quantitative monitoring of the xenon concentration. Respiration gas monitors as known in the art are generally based on infrared absorption and allow detecting CO₂, N₂O, and other commonly applied volatile anesthetics (e.g. halothane, enflurane, isoflurane, desflurane, and sevoflurane). Oxygen (O₂) is detected with separate measuring cells, e.g. making use of the paramagnetic properties of oxygen. Nitrogen (N₂) cannot be detected with those monitors. As pointed out above, noble gases, such as xenon, are not detectable by measuring methods applying infrared and can only be detected by mass spectrometry, which, however, requires expensive monitors, and are thus normally not applicable for standard applications in hospitals.

### SUMMARY OF THE INVENTION

It is an object of the present invention to provide a low cost possibility for determining a noble gas concentration. This object is solved by the independent claims. Preferred embodiments are set out in the dependent claims.

According to the invention, a composition of a gas mixture comprising an amount of one or more noble gases is determined by first measuring a Raman spectrum of the gas mixture. The contribution of the Raman-active gas(es) to the Raman spectrum of the gas mixture, with respect to reference spectra of the Raman-active gas(es), allows to draw back conclusions on the amount of Raman-active gas(es) in the gas mixture, and thus, on the amount of the one or more (Raman non-active) noble gases in the gas mixture.

According to a first aspect of the invention, the measured Raman spectrum is compared with one or more reference spectra. The proportion of the measured spectrum to the reference spectrum or to each one of the reference spectra provides a measure for the proportion of the gas component represented by the respective reference spectrum in the gas mixture. The proportion of the gas component can be determined by comparing one or more peaks of the measured Raman spectrum with one or more peaks in the one or more reference spectra, preferably by comparing the amplitudes and/or intensities of the peaks. The amounts of the Raman-active gases in the gas mixture can thus be summed up and subtracted from the total amount of the gas mixture, whereby the result of the subtraction represents the amount of the one or more noble gases.

According to a second aspect of the invention, the composition of the gas mixture is determined by analyzing the Raman scattering in combination with the Rayleigh scattering. Based on the measured Raman spectrum, the expected intensities of the Rayleigh lines of the Raman-active gases in the gas mixture are determined. The amount of the noble gas in the gas mixture is represented by the difference of the summed up Rayleigh lines of the Raman-active gases to the Rayleigh line in the measured spectrum.

According to a third aspect of the invention, the result of the determining according to the first aspect can be checked using the determining according to the second aspect with the Rayleigh lines of the measured spectrum and the reference spectrum. In case that the intensity of the summed up individual Rayleigh lines equals the intensity of the measured Rayleigh line, the composition of a gas mixture has been determined correctly.

The aspects of the invention can be used as well for a quantitative noble gas determination as for a qualitative noble gas detection e.g. in case that a quantitative evaluation is not required.

The invention is preferably used in a respiration gas monitor for medical purposes preferably for monitoring noble gas constituents such as xenon.

### BRIEF DESCRIPTION OF THE DRAWINGS

Other objects and many of the attendant advantages of the present invention will be readily appreciated and become better understood by reference to the following detailed description when considering in connection with the accompanied drawing in which:
- Fig. 1: depicts the schematic of a gas monitor according to the invention, and
- Fig. 2: shows an example of a measurement of a composition of a gas mixture comprising an unknown amount of xenon and an unknown amount of N₂ and O₂.

### DETAILED DESCRIPTION OF THE INVENTION

According to the **first aspect** of the invention, a composition of a gas mixture comprising an unknown amount of a known noble gas (which is not "Raman-active") and an unknown amount of a number of other gas constituents (which are "Raman-active") is determined by quantitatively determining the amounts of all Raman-active gases and thus recalculating the amount of the Raman non-active noble gas.

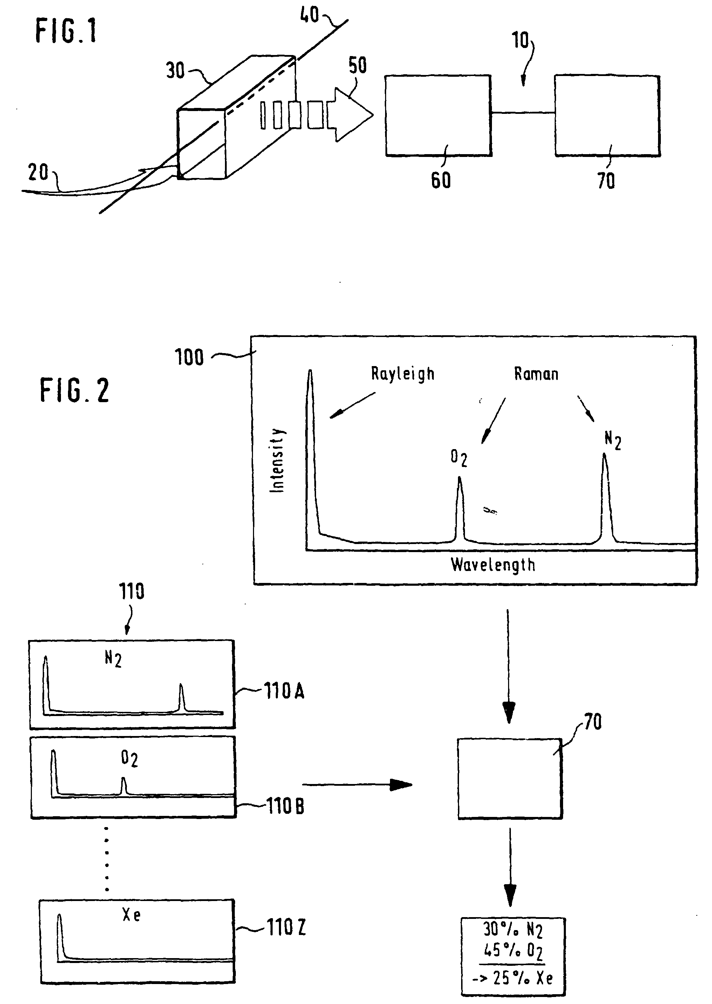

Fig. 1 depicts the schematic of a gas monitor 10 according to the invention. A gas flow 20 is directed through a sample cell 30. An incident light beam 40, e.g. from a laser source, is scattered in the sample cell 30 and a scattering light 50 is received by a spectrograph 60. The spectrograph 60 is further coupled to a processing unit 70 for determining the composition of the gas mixture in the gas flow 20.

The processing unit 70 is preferably further connected (not shown) to the source of the light beam 40 for receiving information about the light beam 40, such as the intensity. The processing unit 70 is preferably further coupled to a (not shown) pressure determining means and a temperature sensor within the sample cell 30 for receiving information about the pressure and temperature therein.

In a first step, the spectrograph 60 of the gas monitor 10 measures the Raman spectrum of the gas mixture and the measured spectrum is then compared with one or more reference spectra of the individual gas components. Each reference spectrum represents the Raman spectrum for the pure gas component, determined under known conditions, e.g. a known condition of pressure and/or temperature within the sample cell 30 and of the intensity of the incident light beam 40. Accordingly, reference spectra can be applied already representing a defined gas mixture. The proportion of the measured spectrum to each reference spectrum provides a direct measure of the proportion of the individual gas component (represented by the reference spectrum) in the gas mixture.

In case that more than one Raman-active component has been detected in the measured spectrum, the proportions of the individual gas components are summed up and subtracted from 100%, thus resulting in the proportion of the Raman non-active (noble gas) component(s) within the gas mixture. In case that there is only one Raman-active component, the proportion of the individual gas component is subtracted from 100% resulting in the proportion of the Raman non-active noble gas within the gas mixture.

The assignment of the peak(s) in the measured spectrum to the individual gas component(s) can be done as known in the art, e.g. by comparing the wavelength(s) of the peak(s) with the wavelength(s) of the reference spectrum/spectra of the individual gas component(s).

The comparison of the measured Raman spectra with the reference Raman spectra is preferably accomplished by determining the ratio of the amplitudes (intensities) for each wavelength channel of the spectrograph. However, other comparison methods e.g. by means of the peak area or the like can be applied accordingly.

In case that a certain individual gas component reveals more than one Raman line, all lines are attenuated substantially evenly, so that, for the purpose of the invention, it is normally sufficient to evaluate only one Raman line for each gas component for determining the proportion of the individual gas component in the gas mixture.

The reference spectra comprising the wavelength positions and intensities are preferably determined by previous measurements and can be stored e.g. in a calibration matrix.

In case that the actual measuring conditions deviate from the measuring conditions of the reference spectra, the measured spectra have to be corrected, e.g. for the effects of pressure, temperature, and light intensity changes, using well-known algorithms.

The intensity of the gas-specific Raman signals also provides a direct measure for the partial pressure of each gas constituent and can consequently be applied for determining the partial pressure of each Raman-active gas component. The gas mixture can be interpreted e.g. by means of the known multi-component analysis (which will be explained later) of the spectral information. According to Dalton's law of partial pressures, the sum of the partial pressures results in 100% of the total gas pressure in the system. The total gas pressure is also measured independently e.g. by a barometer. Thus, if the sum of the partial pressures of the Raman-active gas components of the gas mixture being analyzed adds up to less than the total gas pressure, the difference can be attributed to the partial pressure of the (Raman non-active) noble gas constituent.

The multi-component analysis method allows determining the concentrations of a number of known components in an arbitrary mixture of those components. Mathematically, this is accomplished by the following procedure, which is also called Singular Value Decomposition (SVD):
1. The reference spectrum of each pure component is determined and a limited number of spectral information pieces (e.g. intensities in certain wavelength channels) is stored as a column of a calibration matrix. If the system is calibrated e.g. for 10 different species, and the number of wavelength channels is 50, then the calibration matrix would be a 10 x 50 matrix.
2. The spectrum of the gas mixture to be measured is determined, and the spectral information is brought into the form of a vector (e.g. of 50 elements according to the above example). This vector is then multiplied with the pseudo-inverse of the calibration matrix. This procedure delivers the concentrations of all components of the mixture.

The amount of the noble gas can thus be calculated with a high accuracy by quantitatively measuring all Raman active compounds of the gas mixture and by determining the difference to the ambient pressure.

In a respiratory system, the main components (or constituents) of the respiratory gas (O₂, CO₂, N₂, N₂O, and/or anesthetics) are generally all Raman-active, except of noble gas components such as xenon. In case of a xenon anesthesia, a mixture of air/Xe or O₂/Xe is supplied to the patient and an air/Xe/CO₂ mixture is exhaled. The amount of the noble gas can be calculated as shown above.

Fig. 2 shows an example of a measurement of a composition of a gas mixture comprising an unknown amount of xenon and an unknown amount of a number of other gas constituents, in this example N₂ and O₂. The spectrograph 60 measures the spectrum 100 of the gas mixture. The wavelength position and intensities of a plurality of Raman lines are stored in a calibration matrix 110 with a plurality of individual reference spectra 110A... 110Z for several gas constituents. As explained above, the (reference) spectrum 110Z for xenon does not show a Raman line.

The measured spectrum 100 of the gas mixture is compared with the respective reference spectra 110A, 110B of the calibration matrix 110. The proportions of the peak levels from the reference spectra 110A, 110B, and 110Z to the measured spectrum 100 provides a direct measure for the proportions of the individual components N₂ and O₂ in the gas mixture. In the example of Fig. 2, the wavelength and characteristics of the measured peaks refer to N₂ and O₂. The peak N₂ represents 30% of the reference peak for N₂ in the reference spectrum 110A, and the peak O₂ represents 45% of the reference peak for O₂ in the reference spectrum 110B. The sum of the N₂ and the O₂ ratio is 75%, so that the gas mixture comprises 25% Xe (as the difference to 100%).

Accordingly, the determined partial pressures in the example of Fig. 2 would be 300 mbar for N₂ and 450 mbar for O₂. The sum of the partial pressures of N₂ and O₂ ratio is 750 mbar, whereas the total gas pressure in the sample cell 30 shall be 1 bar, so that the gas mixture comprises a partial pressure of 250 mbar Xe (as the difference to the total gas pressure).

According to the **second aspect** of the invention, the composition of the gas mixture can also be determined by analyzing the Raman scattering in combination with the Rayleigh scattering. Although noble gases are Raman non-active, they contribute, as any gas, to the Rayleigh scattering (as the light scattering at the wavelength of the incident light). Each one of the reference spectra 110 in Fig. 2 shows at the left side the intensity of the Rayleigh line for the pure component.

Based on the measured Raman spectrum, the expected intensities of the Rayleigh lines of the Raman-active gases in the gas mixture are determined. The amount of the noble gas in the gas mixture is represented by the difference of the summed up Rayleigh lines of the Raman-active gases to the Rayleigh line in the measured spectrum.

Each peak in the measured Raman spectrum is analyzed and assigned to an individual gas component of the gas mixture. Since the peaks of each component are attenuated equally, it is sufficient to further analyze one representative peak for each determined gas component. The proportion of each representative peak in the measured spectrum to the corresponding peak in the respective reference spectrum is determined. For each gas component, the determined proportion is applied to the Rayleigh line in the respective reference spectrum thus yielding the expected intensity of the Rayleigh line for this component. The expected intensities of the Rayleigh lines are summed up and the sum is subtracted from the measured Rayleigh line of the gas mixture yielding an intensity difference resulting from the noble gas in the gas mixture. The proportion of the thus determined intensity difference to the intensity of the Rayleigh line in the reference spectrum of the respective noble gas represents the proportion of the noble gas in the gas mixture.

According to the **third aspect**, the result of the determining according to the first aspect is checked using the Rayleigh lines of the measured spectrum and the reference spectrum. For each identified component of the gas mixture, the intensity of the Rayleigh line corresponding to the (determined) proportion of the component in the gas mixture is determined and summed up. In case that the intensity of the summed up individual Rayleigh lines equals the intensity of the measured Rayleigh line, the composition of a gas mixture has been determined correctly.

In the embodiment as described above, the calibration vector of pure noble gas consists of only one Rayleigh line and no Raman line in the reference spectrum (cf. 110Z for xenon). A multi-component analysis of the Raman spectrum including the Rayleigh line thus provides the concentration of the noble gas as well as the concentrations of the other Raman-active gases.

It is to be understood that the Rayleigh line is normally blinded out for the Raman spectroscopy. However, for the purpose of the invention, the Raman spectrometer in the spectrograph 60 is preferably modified in a way that at least a small off-shot of the Rayleigh line can be measured (concurrently) with the Raman lines.

A possibility for measuring the Rayleigh intensity consists of employing a modified optical filter instead of the usual Rayleigh-blocking filter. The transmission characteristic of this filter is designed such that suitable amount of Rayleigh light is transmitted to the detector. An easy way of adjusting the amount of transmitted Rayleigh light is by tilting the filter.

Another possibility is to employ a conventional Rayleigh-blocking filter and to measure the Rayleigh light by a separate additional photodetector, which is placed at a suitable location. Such locations are for instance positions close to the laser beam. Alternatively, the light that is reflected off the Rayleigh filter, which consists only of Rayleigh light, can be directed to the additional photodetector.

It is clear that in case that the gas mixture comprises more than one Raman non-active component, the invention can be employed accordingly to determine the sum of the Raman non-active components. A detailed distinction of the Raman non-active components, if required, can be executed as known in the art, e.g. described in the introductionary part of the description.

Further more, the aspects of the invention can be applied as well in case of a stationary gas mixture as in case of a (continuous) gas flow. In the latter case, in particular the spectrograph 60 and the processing unit 70 should be adapted to the speed of the gas flow.

## Claims

1. A system (10) arranged for determining a composition of a gas mixture comprising an amount of one or more noble gases, the system comprising:
means (60) adapted for measuring a Raman spectrum of the gas mixture, and
a processing unit (70) adapted for quantitatively determining, based on the contribution of one or more Raman-active gas(es) to the measured Raman spectrum, with respect to reference Raman spectra of the Raman-active gas(es), the amount(s) of the Raman-active gas(es) in the gas mixture and for determining therefrom and from a determined total amount of the gas mixture the amount of the one or more noble gases in the gas mixture.

2. The system (10) of claim 1, further comprising reference means (70) adapted for comparing the measured Raman spectrum with one or more reference Raman spectra, whereby the proportion of the measured spectrum to the reference Raman spectrum or to each one of the reference Raman spectra provides a measure for the proportion of the gas component represented by the respective reference Raman spectrum in the gas mixture.

3. The system (10) of claim 2, wherein the reference means (70) comprises means adapted for comparing one or more peaks of the measured Raman spectrum with one or more peaks in the one or more reference Raman spectra, preferably by comparing the amplitudes and/or intensities of the peaks.

4. The system (10) according to any one of the claims 1-3, wherein the processing unit (70) comprises:
means adapted for summing up the amounts of the Raman-active gases in the gas mixture, and
means adapted for subtracting the summed up amounts from the total amount of the gas mixture, whereby the result of the subtraction represents the amount of the one or more noble gases.

5. The system (10) according to any one of the claims 1-4, further comprising:
means adapted for determining a partial pressure of the Raman-active gases in the gas mixture,
means (70) adapted for summing up the determined partial pressures of the Raman-active gases in the gas mixture, and
means (70) adapted for subtracting the summed up partial pressures from the total pressure of the gas mixture, whereby the result of the subtraction represents the partial pressure of the one or more noble gases.

6. The system (10) according to any one of the claims 1-5, wherein the reference Raman spectrum or each one of the reference Raman spectra represents the Raman spectrum for a pure gas component or a defined gas mixture preferably determined under known conditions.

7. The system (10) according to any one of the claims 1-6, further comprising:
a sample cell (30) including the gas mixture (20), and
means adapted for emitting a light beam (40) into the sample cell (30), whereby the processing unit (70) is preferably coupled thereto for receiving information therefrom.

8. The system (10) of claim 7, wherein the sample cell (30) comprises pressure determining means and/or temperature determining means, whereby the processing unit (70) is preferably coupled thereto for receiving information therefrom.

9. A system (10) arranged to determine a composition of a gas mixture comprising an amount of one or more noble gases, the system comprising:
means (60) adapted for measuring a Raman spectrum and a Rayleigh spectrum of the gas mixture, the Rayleigh spectrum comprising a Rayleigh line; and
a processing unit (70) with an analyzing means (70) adapted for quantitatively determining, based on the measured Raman spectrum and reference Raman and Rayleigh spectra of the Raman-active gas(es), an expected contribution of the Raman-active gas(es) to a measured intensity of the Rayleigh line of the measured Rayleigh spectrum of the gas mixture, and for determining from the expected contribution and from the measured intensity of the Raleigh line of the gas mixture the amount of the one or more noble gases in the gas mixture.

10. The system (10) according to claim 9, wherein the analyzing means (70) comprises:
means (70) adapted for determining on the basis of the measured Raman spectrum and the reference Raman spectra of the Raman-active gas(es) in which amount each Raman-active gas is present in the gas mixture,
means (70) adapted for determining an expected intensity of a Rayleigh line corresponding to the determined amount of each Raman-active gas,
means (70) adapted for summing up the expected intensity(s) of the Rayleigh line(s),
means (70) adapted for subtracting the summed up expected intensity(s) of the Rayleigh line(s) from a measured intensity of the Rayleigh line of the gas mixture, whereby the result of the subtraction represents the amount of the one or more noble gases.

11. A respiration gas monitor comprising a system (10) according to any one of the claims 1-10 for monitoring a noble gas, preferably xenon.

12. A method of determining a composition of a gas mixture comprising an amount of one or more noble gases, the method comprising the steps of:
(a) measuring a Raman spectrum of the gas mixture,
(b) quantitatively determining, based on the contribution of one or more Raman-active gas(es) to the measured Raman spectrum, with respect to reference Raman spectra of the Raman-active gas(es), the amount(s) of the Raman-active gas(es) in the gas mixture, and
(c) determining the amount of the one or more noble gases in the gas mixture based on the amount(s) of Raman-active gas(es) as determined in step (b) and from a determined total amount of the gas mixture.

13. The method of claim 12, wherein step (c) comprises a step of comparing the measured Raman spectrum with one or more reference Raman spectra, whereby the proportion of the measured spectrum to the reference Raman spectrum or to each one of the reference Raman spectra, respectively, provides a measure for the proportion of the gas component represented by the respective reference Raman spectrum in the gas mixture.

14. The method of claim 12 or 13, wherein step (c) comprises the steps of summing up the amounts of the Raman-active gases in the gas mixture and subtracting the summed up amounts from the total amount of the gas mixture, whereby the result of the subtraction represents the amount of the one or more noble gases.

15. A method of determining a composition of a gas mixture comprising an amount of one or more noble gases, the method comprising the steps of:
(a) measuring a Raman spectrum and a Rayleigh spectrum of the gas mixture, the Rayleigh spectrum comprising a Rayleigh line
(b) quantitatively determining, based on the measured Raman spectrum and reference Raman and Rayleigh spectra of the Raman-active gas(es), an expected contribution of the Raman-active gas(es) to the intensity of the Rayleigh line of the measured Rayleigh spectrum of the gas mixture, and
(c) determining from the expected contribution and from the measured intensity of the Raleigh line of the gas mixture the amount of the one or more noble gases in the gas mixture.

16. The method according to claim 15, comprising the steps of:
determining from the measured Raman spectrum and the reference Raman spectra of the Raman-active gas(es) in which amount each Raman-active gas is present in the gas mixture,
determining an expected intensity of a Rayleigh line corresponding to the determined amount of each Raman-active gas,
summing up the expected intensity(s) of the Rayleigh line(s),
subtracting the summed up expected intensity(s) of the Rayleigh line(s) from the measured intensity of the Rayleigh line of the gas mixture, whereby the result of the subtraction represents the amount of the one or more noble gases.

## Patentansprüche

1. System (10), das zur Bestimmung einer Zusammensetzung eines Gasgemisches mit einem Anteil von einem oder mehreren Edelgasen angeordnet ist, wobei das System beinhaltet:
Mittel (60), die zum Messen eines Raman-Spektrums des Gasgemisches ausgelegt sind, und
eine Verarbeitungseinheit (70), die basierend auf dem Beitrag von einem oder mehreren Raman-aktiven Gas(en) zu dem gemessenen Raman-Spektrum bezüglich Referenz-Raman-Spektren der (des) Raman-aktiven Gase(s) zur quantitativen Bestimmung der Menge(n) der (des) Raman-aktiven Gase(s) in dem Gasgemisch und zur Bestimmung der Menge des einen oder der mehreren Edelgase in dem Gasgemisch daraus und aus einer ermittelten Gesamtmenge des Gasgemisches ausgelegt ist.

2. System (10) nach Anspruch 1, das des Weiteren Referenzmittel (70) beinhaltet, die zum Vergleichen des gemessenen Raman-Spektrums mit einem oder mehreren Referenz-Raman-Spektren ausgelegt sind, wobei der Bruchteil des gemessenen Spektrums an dem Referenz-Raman-Spektrum oder an jedem der Referenz-Raman-Spektren ein Maß für den Bruchteil der Gaskomponente bereitstellt, die durch das jeweilige Referenz-Raman-Spektrum in dem Gasgemisch repräsentiert wird.

3. System (10) nach Anspruch 2, wobei die Referenzmittel (70) Mittel beinhalten, die zum Vergleichen von einem oder mehreren Spitzenwerten des gemessenen Raman-Spektrums mit einem oder mehreren Spitzenwerten in dem einen oder den mehreren Referenz-Raman-Spektren ausgelegt sind, vorzugsweise durch Vergleichen der Amplituden und/oder der Intensitäten der Spitzenwerte.

4. System (10) nach irgendeinem der Ansprüche 1 bis 3, wobei die Verarbeitungseinheit (70) beinhaltet:
Mittel, die zum Aufsummieren der Mengen der Raman-aktiven Gase in dem Gasgemisch ausgelegt sind, und
Mittel, die zum Subtrahieren der aufsummierten Mengen von der Gesamtmenge des Gasgemisches ausgelegt sind, wobei das Ergebnis der Subtraktion die Menge des einen oder der mehreren Edelgase repräsentiert.

5. System (10) nach irgendeinem der Ansprüche 1 bis 4, das des Weiteren beinhaltet:
Mittel, die zum Bestimmen eines Partialdruckes der Raman-aktiven Gase in dem Gasgemisch ausgelegt sind,
Mittel (70), die zum Aufsummieren der ermittelten Partialdrücke der Raman-aktiven Gase in dem Gasgemisch ausgelegt sind, und
Mittel (70), die zum Subtrahieren der aufsummierten Partialdrücke von dem Gesamtdruck des Gasgemisches ausgelegt sind, wobei das Ergebnis der Subtraktion den Partialdruck des einen oder der mehreren Edelgase repräsentiert.

6. System (10) nach irgendeinem der Ansprüche 1 bis 5, wobei das Referenz-Raman-Spektrum oder jedes der Referenz-Raman-Spektren das Raman-Spektrum für eine reine Gaskomponente oder ein definiertes Gasgemisch repräsentiert, das vorzugsweise unter bekannten Bedingungen bestimmt wurde.

7. System (10) nach irgendeinem der Ansprüche 1 bis 6, das des Weiteren beinhaltet:
eine Probenzelle (30), die das Gasgemisch (20) enthält, und
Mittel, die zum Emittieren eines Lichtstrahls (40) in die Probenzelle (30) ausgelegt sind, wobei die Verarbeitungseinheit (70) vorzugsweise an diese gekoppelt ist, um Information aus dieser zu empfangen.

8. System (10) nach Anspruch 7, wobei die Probenzelle (30) Druckbestimmungsmittel und/oder Temperaturbestimmungsmittel beinhaltet, wobei die Verarbeitungseinheit (70) vorzugsweise an diese gekoppelt ist, um Information aus diesen zu empfangen.

9. System (10), das so angeordnet ist, dass es eine Zusammensetzung eines Gasgemisches mit einem Anteil von einem oder mehreren Edelgasen bestimmt, wobei das System beinhaltet:
Mittel (60), die zum Messen eines Raman-Spektrums und eines Rayleigh-Spektrums des Gasgemisches ausgelegt sind, wobei das Rayleigh-Spektrum eine Rayleigh-Linie beinhaltet; und
eine Verarbeitungseinheit (70) mit Analysierungsmitteln (70), die dafür ausgelegt sind, basierend auf dem gemessenen Raman-Spektrum und Referenz-Raman- und Rayleigh-Spektren der (des) Raman-aktiven Gase(s) einen erwarteten Beitrag der (des) Raman-aktiven Gase(s) an einer gemessenen Intensität der Rayleigh-Linie des gemessenen Rayleigh-Spektrums des Gasgemisches quantitativ zu bestimmen und die Menge des einen oder der mehreren Edelgase in dem Gasgemisch aus dem erwarteten Beitrag und aus der gemessenen Intensität der Rayleigh-Linie des Gasgemisches zu bestimmen.

10. System (10) nach Anspruch 9, wobei die Analysierungsmittel (70) beinhalten:
Mittel (70), die dafür ausgelegt sind, basierend auf dem gemessenen Raman-Spektrum und den Referenz-Raman-Spektren der (des) Raman-aktiven Gase(s) zu bestimmen, in welcher Menge jedes Raman-aktive Gas in dem Gasgemisch vorliegt,
Mittel (70), die zur Bestimmung einer erwarteten Intensität einer Rayleigh-Linie entsprechend der ermittelten Menge jedes Raman-aktiven Gases ausgelegt sind,
Mittel (70), die zur Aufsummierung der erwarteten Intensität(en) der Rayleigh-Linie(n) ausgelegt sind,
Mittel (70), die zum Subtrahieren der aufsummierten erwarteten Intensität(en) der Rayleigh-Linie(n) von einer gemessenen Intensität der Rayleigh-Linie des Gasgemisches ausgelegt sind, wobei das Resultat der Subtraktion die Menge des einen oder der mehreren Edelgase repräsentiert.

11. Respirations-Gasmonitor mit einem System (10) gemäß irgendeinem der Ansprüche 1 bis 10 zum Überwachen eines Edelgases, vorzugsweise Xenon.

12. Verfahren zur Bestimmung einer Zusammensetzung eines Gasgemisches mit einem Anteil von einem oder mehreren Edelgasen, wobei das Verfahren die Schritte umfasst:
(a) Messen eines Raman-Spektrums des Gasgemisches,
(b) quantitatives Bestimmen der Menge(n) des (des) Raman-aktiven Gase(s) in dem Gasgemisch basierend auf dem Beitrag eines oder mehrerer Raman-aktiven Gase an dem gemessenen Raman-Spektrum bezüglich der Referenz-Raman-Spektren der (des) Raman-aktiven Gase(s) und
(c) Bestimmen der Menge des einen oder der mehreren Edelgase in dem Gasgemisch basierend auf der (den) Menge(n) der (des) Raman-aktiven Gase(s), wie sie in Schritt (b) bestimmt wurden, und aus einer ermittelten Gesamtmenge des Gasgemisches.

13. Verfahren nach Anspruch 12, wobei der Schritt (c) einen Schritt des Vergleichens des gemessenen Raman-Spektrums mit einem oder mehreren Referenz-Raman-Spektren umfasst, wobei der Bruchteil des gemessenen Spektrums an dem Referenz-Raman-Spektrum beziehungsweise an jedem der Referenz-Raman-Spektren ein Maß für den Bruchteil der Gaskomponente, die durch das jeweilige Referenz-Raman-Spektrum repräsentiert wird, in dem Gasgemisch bereitstellt.

14. Verfahren nach Anspruch 12 oder 13, wobei der Schritt (c) die Schritte des Aufsummierens der Mengen der Raman-aktiven Gase in dem Gasgemisch und des Subtrahierens der aufsummierten Mengen von der Gesamtmenge des Gasgemisches umfasst, wobei das Resultat der Subtraktion die Menge des einen oder der mehreren Edelgase repräsentiert.

15. Verfahren zur Bestimmung einer Zusammensetzung eines Gasgemisches mit einem Anteil von einem oder mehreren Edelgasen, wobei das Verfahren die Schritte umfasst:
(a) Messen eines Raman-Spektrums und eines Rayleigh-Spektrums des Gasgemisches, wobei das Rayleigh-Spektrum eine Rayleigh-Linie beinhaltet,
(b) quantitative Bestimmung eines erwarteten Beitrags der (des) Raman-aktiven Gase(s) an der Intensität der Rayleigh-Linie des gemessenen Rayleigh-Spektrums des Gasgemisches basierend auf dem gemessenen Raman-Spektrum und den Referenz-Raman- und Rayleigh-Spektren der (des) Raman-aktiven Gase(s), und
(c) Bestimmen der Menge des einen oder der mehreren Edelgase in dem Gasgemisch aus dem erwarteten Beitrag und aus der gemessenen Intensität der Rayleigh-Linie des Gasgemisches.

16. Verfahren nach Anspruch 15, das die Schritte umfasst:
Bestimmen, in welcher Menge jedes Raman-aktive Gas in dem Gasgemisch vorliegt, aus dem gemessenen Raman-Spektrum und den Referenz-Raman-Spektren der (des) Raman-aktiven Gase(s),
Bestimmen einer erwarteten Intensität einer Rayleigh-Linie entsprechend der ermittelten Menge jedes Raman-aktiven Gases,
Aufsummieren der erwarteten Intensität(en) der Rayleigh-Linie(n),
Subtrahieren der aufsummierten erwarteten Intensität(en) der Rayleigh-Linie(n) aus der gemessenen Intensität der Rayleigh-Linie des Gasgemisches, wobei das Resultat der Subtraktion die Menge des einen oder der mehreren Edelgase repräsentiert.

## Revendications

1. Système (10) agencé pour déterminer une composition d'un mélange de gaz comprenant une certaine quantité d'un ou plusieurs gaz nobles, le système comprenant :
des moyens (60) adaptés pour mesurer un spectre de Raman du mélange de gaz, et
une unité de traitement (70) adaptée pour déterminer de manière quantitative, en se basant sur la contribution d'un ou plusieurs gaz Raman actifs au spectre de Raman mesuré, par rapport aux spectres de Raman de référence du (des) gaz Raman actif(s), la (les) quantité(s) du (des) gaz Raman actif(s) dans le mélange de gaz et pour déterminer à partir de là et à partir d'une quantité totale déterminée du mélange de gaz, la quantité du ou des gaz nobles dans le mélange de gaz.

2. Système (10) selon la revendication 1, comprenant en outre des moyens de référence (70) adaptés pour comparer le spectre de Raman mesuré à un ou plusieurs spectres de Raman de référence, de façon que la proportion du spectre mesuré par rapport au spectre de Raman de référence ou par rapport à chacun des spectres de Raman de référence fournisse une mesure pour la proportion du composant gazeux représenté par le spectre de Raman de référence respectif dans le mélange de gaz.

3. Système (10) selon la revendication 2, dans lequel les moyens de référence (70) comprennent des moyens adaptés pour comparer une ou plusieurs crêtes du spectre de Raman mesuré à une ou plusieurs crêtes du ou des spectres de Raman, de préférence en comparant les amplitudes et/ou les intensités des crêtes.

4. Système (10) selon l'une quelconque des revendications 1 à 3, dans lequel l'unité de traitement (70) comprend :
des moyens adaptés pour additionner les quantités des gaz Raman actifs dans le mélange de gaz, et
des moyens adaptés pour soustraire les quantités additionnées de la quantité totale du mélange de gaz, de façon que le résultat de la soustraction représente la quantité du ou des gaz nobles.

5. Système (10) selon l'une quelconque des revendications 1 à 4, comprenant en outre :
des moyens adaptés pour déterminer une pression partielle des gaz Raman actifs dans le mélange de gaz,
des moyens (70) adaptés pour additionner les pressions partielles déterminées des gaz Raman actifs dans le mélange de gaz, et
des moyens (70) adaptés pour soustraire les pressions partielles additionnées de la pression totale du mélange de gaz, de façon que le résultat de la soustraction représente la pression partielle du ou des gaz nobles.

6. Système (10) selon l'une quelconque des revendications 1 à 5, dans lequel le spectre de Raman de référence ou de chacun des spectres de Raman de référence représente le spectre de Raman pour un composant gazeux pur ou un mélange de gaz défini déterminé, de préférence, dans des conditions connues.

7. Système (10) selon l'une quelconque des revendications 1 à 6, comprenant en outre :
une cellule d'échantillon (30) comportant le mélange de gaz (20), et
des moyens adaptés pour émettre un faisceau de lumière (40) dans la cellule d'échantillon (30), de façon que l'unité de traitement (70) soit couplée, de préférence, à celle-ci pour recevoir des informations de celle-ci.

8. Système (10) selon la revendication 7, dans lequel la cellule d'échantillon (30) comprend des moyens de détermination de pression et/où des moyens de détermination de température, de façon que l'unité de traitement (70) y soit couplée, de préférence, pour recevoir des informations de ceux-ci.

9. Système (10) agencé pour déterminer la composition d'un mélange de gaz comprenant une certaine quantité d'un ou plusieurs gaz nobles, le système comprenant :
des moyens (60) adaptés pour mesurer un spectre de Raman et un spectre de Rayleigh de la ligne de mélange de gaz ; et le spectre de Rayleigh comprenant une unité de traitement de Rayleigh ; et
une unité de traitement (70) avec des moyens d'analyse (70), adaptés pour déterminer quantitativement, en se basant sur le spectre de Raman mesuré et les spectres de Raman de référence et de Rayleigh du (des) gaz Raman actif(s), une contribution attendue du (des) gaz Raman actif (s) à une intensité mesurée de la ligne de Rayleigh du mélange de gaz et pour déterminer à partir de la contribution attendue et à partir de l'intensité mesurée de la ligne de Rayleigh du mélange de gaz, la quantité du ou des gaz nobles dans le mélange de gaz.

10. Système (10) selon la revendication 9, dans lequel les moyens d'analyse (70) comprennent :
des moyens (70) adaptés pour déterminer sur la base du spectre de Raman mesuré et du spectre de Raman de référence du (des) gaz Raman actifs, en quelle quantité chaque gaz Raman actif est présent dans le mélange de gaz,
des moyens (70) adaptés pour déterminer une intensité attendue d'une ligne de Rayleigh correspondant à la quantité déterminée de chaque gaz Raman actif,
des moyens (70) adaptés pour additionner l'(les) intensité(s) attendue(s) de la (des) ligne(s) de Rayleigh,
des moyens (70) adaptés pour soustraire l'(les) intensité(s) attendue(s) additionnée(s) (des) ligne(s) de Rayleigh à partir d'une intensité mesurée de la ligne de Rayleigh du mélange de gaz, de façon que le résultat de la soustraction représente la quantité du ou des gaz nobles.

11. Moniteur de gaz respiratoire comprenant un système (10) selon l'une quelconque des revendications 1 à 10, pour surveiller un gaz noble, de préférence du xénon.

12. Procédé de détermination d'une composition d'un mélange de gaz comprenant une certaine quantité d'un ou plusieurs gaz nobles, le procédé comprenant les étapes consistant à :
(a) mesurer un spectre de Raman du mélange de gaz,
(b) déterminer quantitativement, en se basant sur la contribution d'un ou plusieurs gaz Raman actif(s), au spectre de Raman mesuré, en ce qui concerne le spectre de Raman de référence du (dé) gaz Raman actif(s), la (les) quantité(s) du (des) gaz Raman actif(s) dans le mélange de gaz, et
(c) déterminer la quantité du ou des gaz nobles dans le mélange de gaz en se basant sur la (les) quantité (s) de gaz Raman actifs comme déterminé à l'étape (b) et d'après une quantité totale déterminée du mélange de gaz.

13. Procédé selon la revendication 12, dans lequel l'étape (c) comprend une étape de comparaison du spectre de Raman mesuré avec un ou plusieurs spectres de Raman de référence, de façon que la proportion du spectre mesuré par rapport au spectre de Raman de référence ou par rapport respectivement à chacun des spectres de Raman de référence, fournisse une mesure pour la proportion du composant gazeux représenté par le spectre de Raman de référence dans le mélange de gaz.

14. Procédé selon la revendication 12 ou 13, dans lequel l'étape (c) comprend les étapes consistant à additionner les quantités des gaz Raman actifs dans le mélange de gaz et soustraire les quantités additionnées de la quantité totale du mélange de gaz, de façon que le résultat de la soustraction représente la quantité du ou des gaz nobles.

15. Procédé de détermination d'une composition d'un mélange de gaz comprenant une certaine quantité d'un ou plusieurs gaz nobles, le procédé comprenant les étapes consistant à :
(a) mesurer un spectre de Raman et un spectre de Rayleigh du mélange de gaz, le spectre de Rayleigh comprenant une ligne de Rayleigh
(b) déterminer quantitativement, en se basant sur le spectre de Raman mesuré et les spectres de Raman et de Rayleigh de référence du (des) gaz Raman actif(s), une contribution attendue du (des) gaz Raman actifs à l'intensité de la ligne de Rayleigh du spectre de Rayleigh mesuré du mélange de gaz, et
(c) déterminer d'après la contribution attendue et d'après l'intensité mesurée de la ligne de Rayleigh du mélange de gaz la quantité d'un ou plusieurs gaz nobles dans le mélange de gaz.

16. Procédé selon la revendication 15, comprenant les étapes consistant à :
déterminer à partir du spectre de Raman mesuré et des spectres de Raman de référence du (des) gaz Raman actif(s) en quelle quantité chaque gaz Raman actif est présent dans le mélange de gaz,
déterminer une intensité attendue d'une ligne de Rayleigh correspondant à la quantité déterminée de chaque gaz Raman actif, aditionner l'/les intensité (s) prévue (s) de lignes de Rayleigh.
Soustraire l'/les intensité (s) de ligne (s) de Rayleigh prévue(s) des intensités mesurées de ligne de rayleigh du mélange gazeux, dans lequel le résultat de la soustraction représente la quantité d'un ou plusieurs gaz nobles.
